# EUROPEAN PATENT APPLICATION

(11) **EP 4 675 536 A1**
(43) Date of publication of application: **07.01.2026**
(21) Application number: 24763388.6
(22) Date of filing: 05.01.2024
(51) Int. Cl.: G06Q 20/38, G06Q 20/36, G06Q 20/40, H04L 9/32, H04L 9/08

(54) **INFORMATION PROCESSING DEVICE, INFORMATION PROCESSING METHOD, AND PROGRAM**

(30) Priority: 27.02.2023 JP 2023028108
(71) Applicant: Sony Group Corporation, Tokyo 108-0075 (JP)
(72) Inventor: MAEDA, Yusaku, Tokyo 108-0075 (JP); MARUYAMA, Shinya, Tokyo 108-0075 (JP)
(74) Representative: MFG Patentanwälte Meyer-Wildhagen Meggle-Freund Gerhard PartG mbB
(86) International application number: PCT/JP2024/000037
(87) International publication number: WO 2024/180903

(57) **Abstract**

[Problem] To verify which one of the distribution pieces of a secret key has been used to generate an electronic signature generated by the secret key.

[Solution] An information processing device including: a distribution destination control unit that controls a plurality of distribution destinations for respectively storing a plurality of distribution pieces obtained by secretly distributing a secret key, on the basis of a selection by a user; a signature generation unit that generates an electronic signature by the secret key, by using part of the plurality of distribution pieces stored in the plurality of distribution destinations; a transaction issuance unit that issues a transaction, which is attached with the electronic signature, to a blockchain; and an audit unit that verifies which one of the plurality of distribution pieces has been used to generate the electronic signature attached to the transaction on the blockchain.

## Description

### [Technical Field]

The present disclosure relates to an information processing device, an information processing method, and a program.

### [Background Art]

In recent years, crypto-asset transactions using blockchain technology have been increasingly active. For managing such crypto-assets, a wallet serving as a virtual wallet is used. The wallet is a system that manages the address of a crypto-asset owned by a user and manages a secret key and a public key that are provided for generating an electronic signature to be used in a crypto-asset transaction. The wallet is roughly classified into two types depending on the method for managing a secret key.

For example, a custodial wallet allows a user to leave secret key management to a trader. In the custodial wallet, a user can trade crypto-assets by accessing the service of the trader from a freely-selected device, though trust in a trader is required.

In contrast, in a non-custodial wallet, a user has to manage his/her secret key. Although a non-custodial wallet allows a user to trade crypto-assets without relying on trust in a third party, it becomes difficult to trade crypto-assets on a freely-selected device.

That is, it is generally known that flexibility in the operation of a secret key decreases if even safer management of the secret key is pursued. Thus, in order to achieve both security in the management of the secret key in a wallet and flexibility in the operation of the secret key, for example, the use of multi-party computation (MPC) technology for the management of secret keys has been examined (see NPL 1 and 2 below).

The MPC technology is a cryptographic technology that derives a calculation result obtained using values entered from a plurality of subjects, which do not trust one another, without sharing the respective input values. Accordingly, in a wallet using the MPC technology, a secret key is divided into a plurality of distribution pieces, which are to be managed in a distributed manner, and the distribution pieces are acquired from distribution destinations when an electronic signature is generated, thereby calculating the calculation result required for the electronic signature without restoring the secret key.

### [Citation List]

### [Non Patent Literature]

[NPL 1]
   Yehuda Lindell, "Fast Secure Two-Party ECDSA Signing", Journal of Cryptology, 2021, Volume 34, issue 4, Article: 44
[NPL 2]
   Rosario Gennaro and Steven Goldfeder, "Fast Multiparty Threshold ECDSA with Fast Trustless Setup", CCS '18: Proceedings of the 2018 ACM SIGSAC Conference on Computer and Communications Security, October 2018, p. 1179-1194

### [Summary]

### [Technical Problem]

However, depending on the setting, the MPC technology may be able to generate an electronic signature without collecting all the distribution pieces of a secret key. Thus, in some methods for distribution management of distribution pieces, an electronic signature may be generated without the involvement of the wallet user.

Thus, in order to find loss or theft of distribution pieces at an early stage, there has been a need for a technique that can verify which one of distribution pieces of a secret key has been used to generate an electronic signature using the secret key.

### [Solution to Problem]

The present disclosure provides an information processing device including a distribution destination control unit that controls a plurality of distribution destinations for respectively storing a plurality of distribution pieces obtained by secretly distributing a secret key, on the basis of a selection by a user; a signature generation unit that generates an electronic signature by the secret key, by using part of the plurality of distribution pieces stored in the plurality of distribution destinations; a transaction issuance unit that issues a transaction, which is attached with the electronic signature, to a blockchain; and an audit unit that verifies which one of the plurality of distribution pieces has been used to generate the electronic signature attached to the transaction on the blockchain.

Furthermore, the present disclosure provides an information processing method performed by a computer, the method including: controlling a plurality of distribution destinations for respectively storing a plurality of distribution pieces obtained by secretly distributing a secret key, on the basis of a selection by a user; generating an electronic signature by the secret key, by using part of the plurality of distribution pieces stored in the plurality of distribution destinations; issuing a transaction, which is attached with the electronic signature, to a blockchain; and verifying which one of the plurality of distribution pieces has been used to generate the electronic signature attached to the transaction on the blockchain.

In addition, the present disclosure provides a program causing a computer to function as: a distribution destination control unit that controls a plurality of distribution destinations for respectively storing a plurality of distribution pieces obtained by secretly distributing a secret key, on the basis of a selection by a user; a signature generation unit that generates an electronic signature by the secret key, by using part of the plurality of distribution pieces stored in the plurality of distribution destinations; a transaction issuance unit that issues a transaction, which is attached with the electronic signature, to a blockchain; and an audit unit that verifies which one of the plurality of distribution pieces has been used to generate the electronic signature attached to the transaction on the blockchain.

### [Brief Description of Drawings]

[Fig. 1]

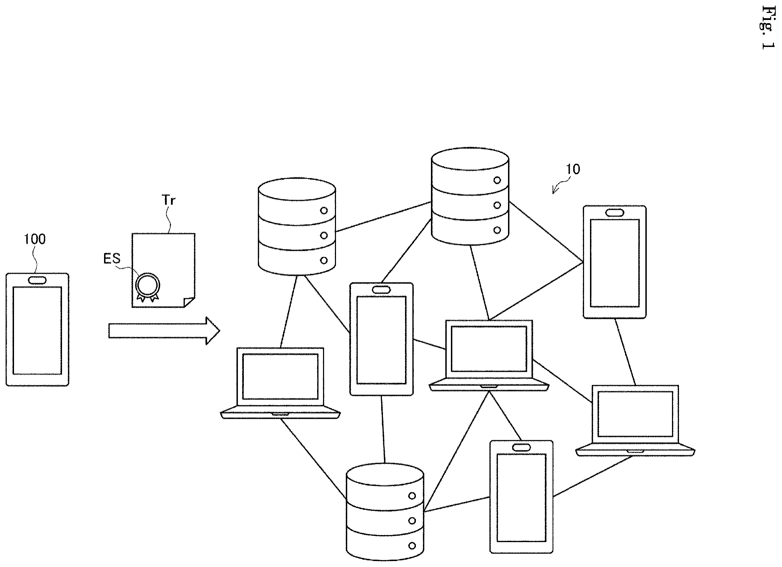

   Fig. 1 is an explanatory drawing showing a crypto-asset transaction using blockchain technology.
[Fig. 2]

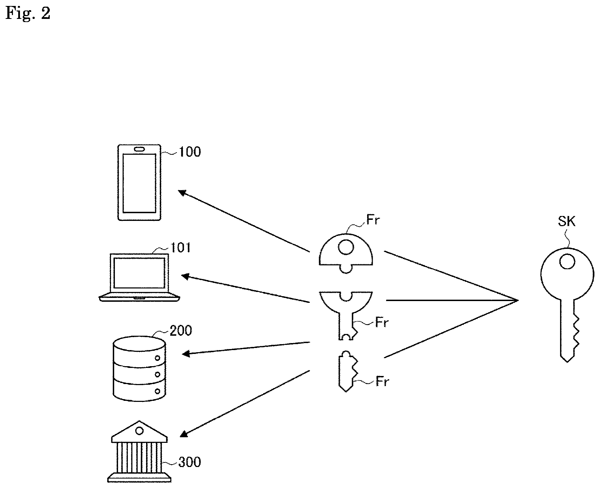

   Fig. 2 is an explanatory drawing showing the distributed management of a secret key according to the MPC technology.
[Fig. 3]

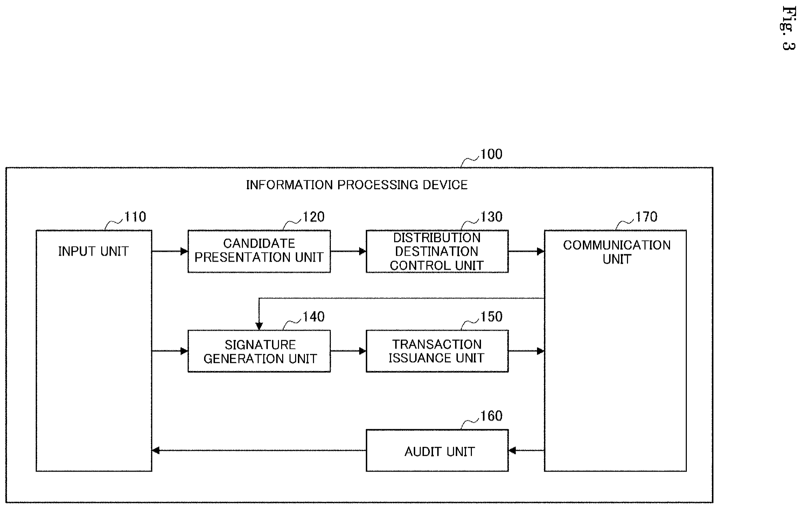

   Fig. 3 is a block diagram showing the internal configuration of an information processing device according to an embodiment of the present disclosure.
[Fig. 4]

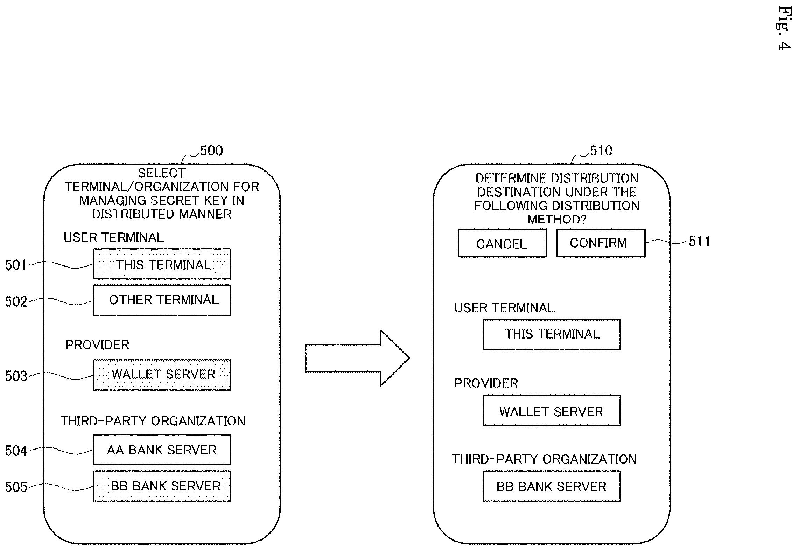

   Fig. 4 is an explanatory drawing showing an example of an image for selecting distribution destinations where the distribution pieces of the secret key are to be stored.
[Fig. 5]

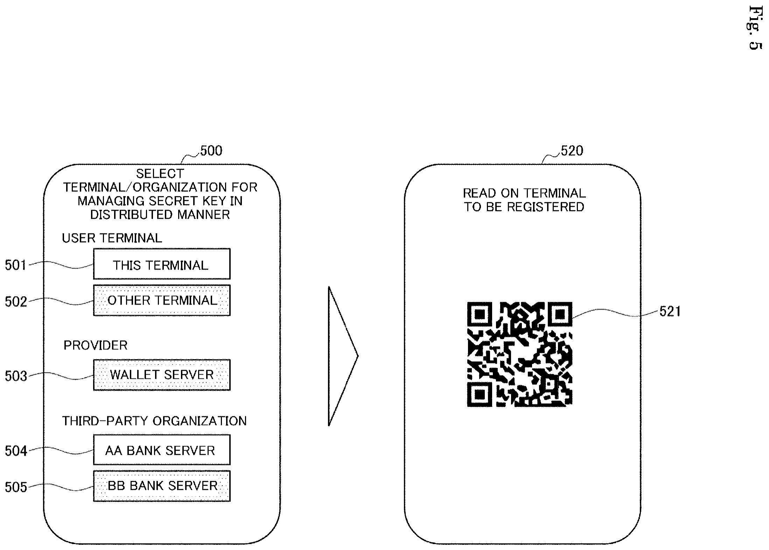

   Fig. 5 is an explanatory drawing showing an example of an image for allowing the other terminal owned by a user to participate in the distributed management of distribution pieces.
[Fig. 6]

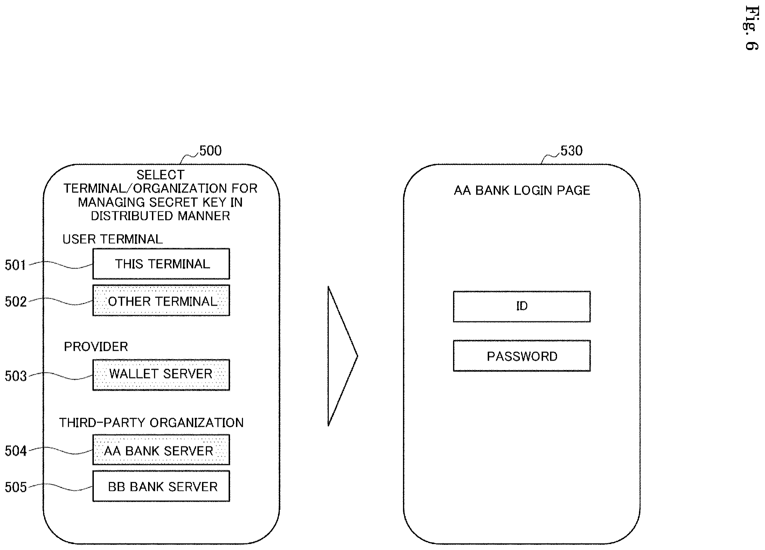

   Fig. 6 is an explanatory drawing showing an example of an image for allowing the server of AA bank, which is a third-party organization, to participate in the distributed management of the distribution pieces.
[Fig. 7]

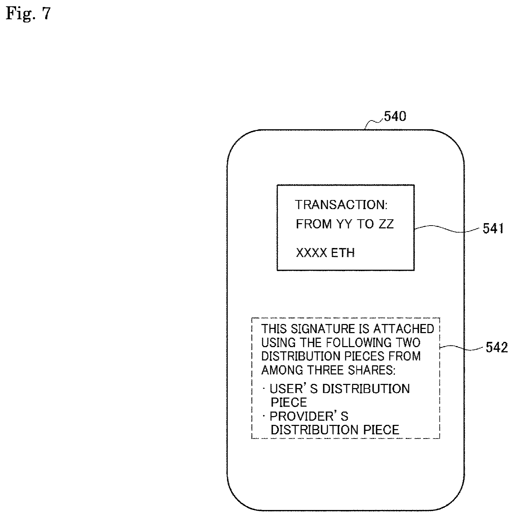

   Fig. 7 is an explanatory drawing showing an example of an image showing the verification result of an electronic signature attached to a transaction.
[Fig. 8]

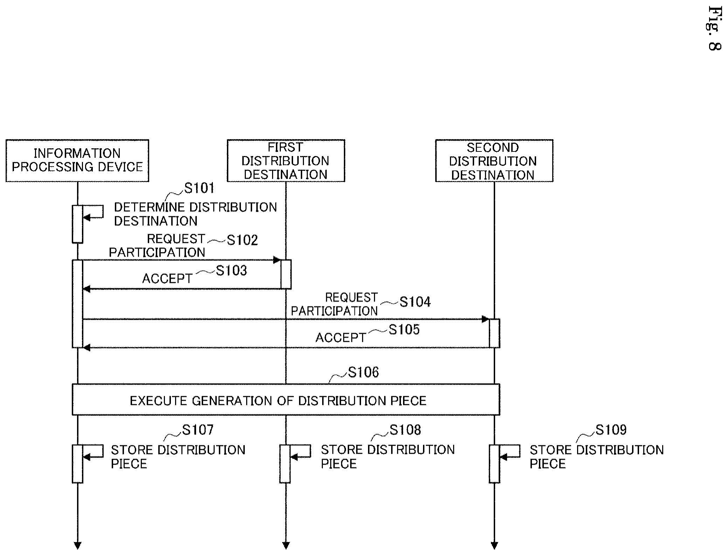

   Fig. 8 is a sequence diagram showing the operations of the information processing device when the distribution pieces of the secret key are generated.
[Fig. 9]

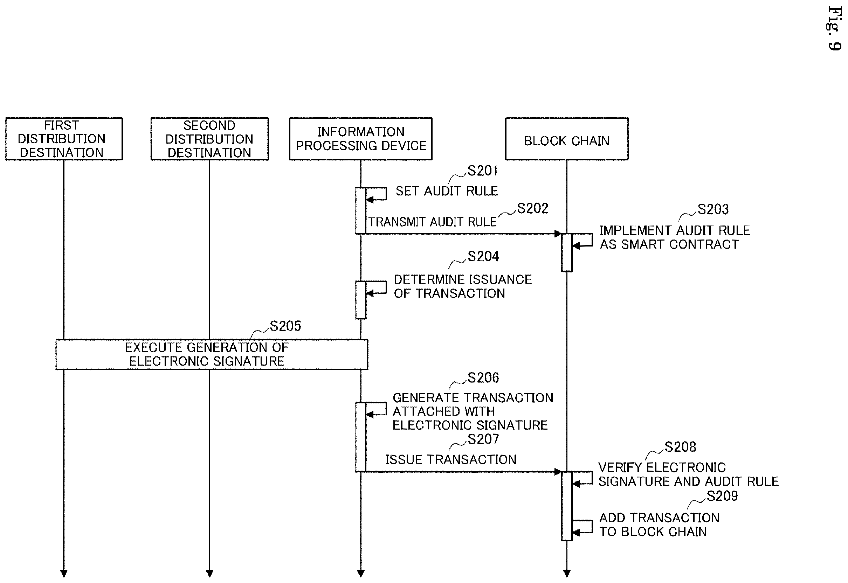

   Fig. 9 is a sequence showing the operations of the information processing device when the transaction is issued.
[Fig. 10]

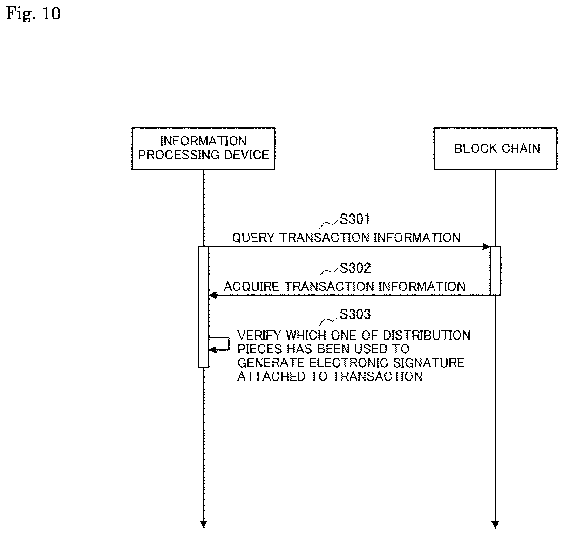

   Fig. 10 is a sequence showing the operations of the information processing device when the electronic signature is verified.
[Fig. 11]

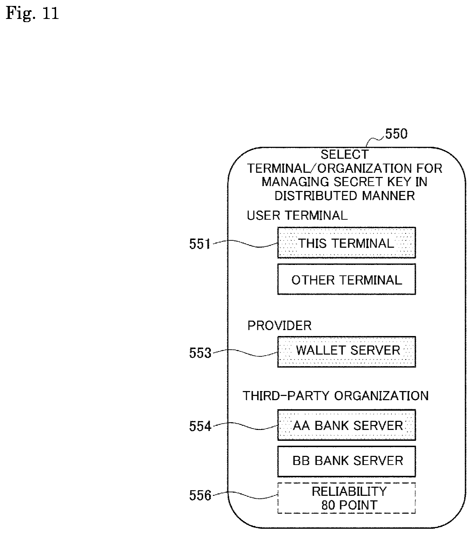

   Fig. 11 is an explanatory drawing showing an example of an image that indicates the reliability of distribution destinations where the distribution pieces are managed in a distributed manner.
[Fig. 12]

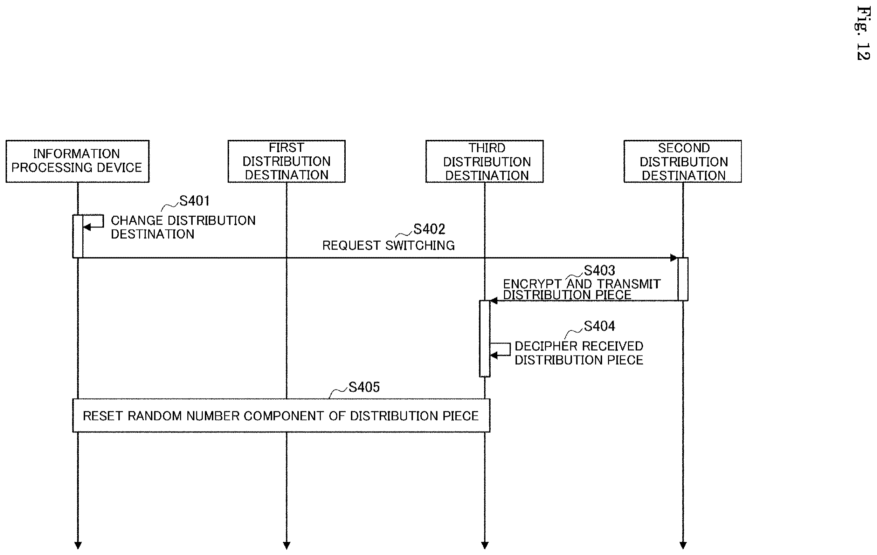

   Fig. 12 is a sequence showing the operations of the information processing device when the distribution destination for storing the distribution piece is switched to another distribution destination.
[Fig. 13]

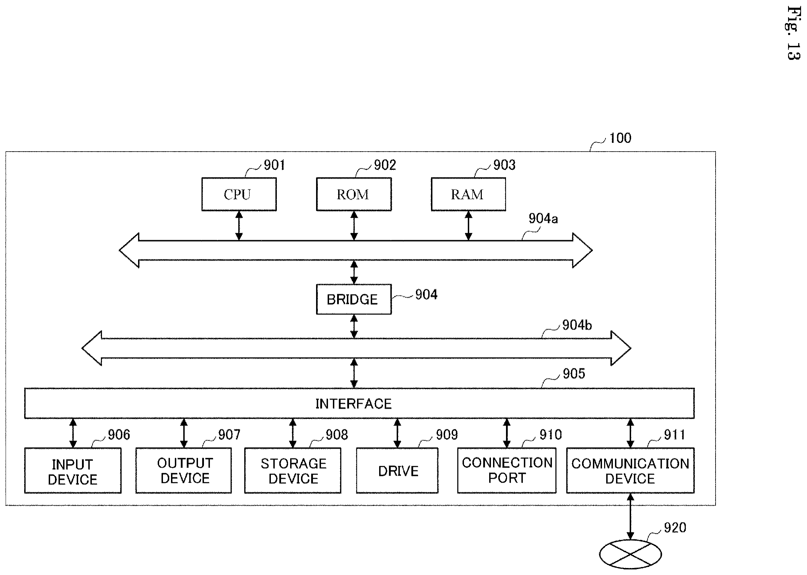

   Fig. 13 is a block diagram illustrating a hardware configuration example of an information processing device according to an embodiment of the present disclosure.

### [Description of Embodiments]

A preferred embodiment of the present disclosure will be described in detail with reference to the accompanying drawings. Note that in the present specification and the drawings, components having substantially the same functional configurations will be denoted by the same reference numerals, and repeated descriptions thereof will be omitted.

The descriptions will be given in the following order.
1. Background art of present disclosure
2. Configuration of information processing device
3. Operations of information processing device
3.1. Operations in generation of distribution pieces
3.2. Operations in transaction issuance
3.3. Operations in verification of electronic signature
4. Modifications
4.1. First modification
4.2. Second modification
5. Hardware configuration

### <1. Background art of present disclosure>

First, referring to Figs. 1 and 2, the background art of an information processing device 100 according to an embodiment of the present disclosure will be described below. Fig. 1 is an explanatory drawing showing a crypto-asset transaction using blockchain technology. Fig. 2 is an explanatory drawing showing the distributed management of a secret key according to the MPC technology.

As shown in Fig. 1, crypto-assets are property values managed in a distributed manner in an information processing system 10 configured such that a plurality of terminals on a network are directly connected to one another. The information processing system 10 records, in a blockchain, the transaction history of crypto-assets generated in the network and manages the blockchain at the plurality of terminals in a distributed manner.

For example, when a transaction Tr indicating the transaction of a crypto-asset is issued from the information processing device 100, each node of the information processing system 10 verifies the issued transaction Tr in each predetermined period and collects the verified transactions Tr as a block. The block of the transactions Tr is linked as a new block to the blockchain, so that the transaction of crypto-assets included in the block is established.

At this point of time, the transaction Tr is assigned with an electronic signature ES by a user who has issued the transaction Tr. The electronic signature ES is attached to confirm whether or not the contents of the transaction Tr have been tampered. The electronic signature ES can be verified with a public key corresponding to a secret key used in the generation of the electronic signature ES.

The secret key for generating the electronic signature ES assigned to the transaction Tr is managed by, for example, a wallet installed on the information processing device 100 and is used when the transaction Tr is generated in the information processing device 100. Accordingly, in order to properly manage crypto-assets, it is important to properly manage the secret key for generating the electronic signature ES so as to prevent loss or theft of the secret key.

Thus, in order to manage the secret key more safely, as shown in Fig. 2, it has been examined to divide the secret key SK into a plurality of distribution pieces Fr and manage the distribution pieces Fr according to the multi-party computation (MPC) technology. The plurality of distribution pieces Fr obtained by dividing the secret key SK are managed in a distributed manner in, for example, the information processing device 100 installed with a user's wallet, an other terminal 101 owned by the user, a server 200 for a service provider of crypto-asset transactions, or a third-party organization 300.

The distribution piece Fr of the secret key SK cannot generate the electronic signature ES alone. Thus, by managing the distribution pieces Fr in a distributed manner, the user can reduce the risk of generating the electronic signature ES for others when the distribution piece Fr is lost or stolen. In contrast, according to the MPC technology, the information processing device 100 collects a predetermined number of distribution pieces Fr from the distribution pieces Fr of the secret key SK, thereby generating the electronic signature ES with the secret key SK without restoring the secret key SK. Accordingly, by managing the distribution pieces Fr of the secret key SK in a distributed manner among different subjects or different terminals, the risk in storage of the secret key SK can be reduced while maintaining the convenience of the secret key SK.

The information processing device 100 according to the present embodiment can control distribution destinations for storing the distribution pieces Fr of the secret key SK, on the basis of a user selection. In such a case, the information processing device 100 can manage the distribution pieces Fr in a distributed manner at distribution destinations reliable to the user, thereby further improving the sense of security in crypto-asset transactions.

Furthermore, the information processing device 100 according to the present embodiment can verify which one of the distribution pieces Fr of the secret key SK has been used to generate the electronic signature ES that is generated by the secret key SK. This allows the information processing device 100 to early discover loss or theft of the distribution piece Fr of the secret key SK by verifying generation of the electronic signature ES not recognized by the user. Thus, the information processing device 100 can further improve the security of the operation of the secret key SK.

### <2. Configuration of information processing device>

The configuration of the information processing device 100 according to the present embodiment will be described below with reference to Fig. 3. Fig. 3 is a block diagram showing the internal configuration of the information processing device 100 according to the present embodiment.

As shown in Fig. 3, the information processing device 100 includes an input unit 110, a candidate presentation unit 120, a distribution destination control unit 130, a signature generation unit 140, a transaction issuance unit 150, an audit unit 160, and a communication unit 170.

For example, the input unit 110 is a device such as a mouse, a keyboard, a touch panel, a button, a switch, or a lever that receives an entry from the user. The input unit 110 can receive, from a user, an entry specifying distribution destinations where the distribution pieces Fr of the secret key SK are managed in a distributed manner. The input unit 110 can also accept an entry of crypto-asset transaction contents from the user.

The candidate presentation unit 120 presents, to the user, the candidates of distribution destinations where the distribution pieces Fr obtained by dividing the secret key SK are stored respectively. In order to avoid the risk of misuse, theft, or loss, the distribution pieces Fr of the secret key SK are desirably managed in a distributed manner among different subjects or different terminals. Thus, the candidate presentation unit 120 presents, to the user, the candidates of distribution destinations where the distribution pieces Fr of the secret key SK can be separately managed among different subjects or terminals. For example, the candidate presentation unit 120 may present, as the distribution destination candidates of the distribution pieces Fr, the information processing device 100, the other terminal owned by the user, a server for a service provider of crypto-asset transactions, or a server for a third-party organization. The user can determine distribution destinations where the distribution pieces Fr of the secret key SK are to be stored, by selecting a predetermined number of candidates from among the distribution destination candidates presented by the candidate presentation unit 120.

In addition, the candidate presentation unit 120 may present terminals owned by user's relatives or friends as distribution destination candidates of the distribution pieces Fr. The candidate presentation unit 120 may present other distribution destination candidates to the user if the candidates are terminals owned by reliable persons or servers of reliable organizations.

For example, the candidate presentation unit 120 may present an image 500 in Fig. 4 to the user to present the candidates of distribution destinations where the distribution pieces Fr of the secret key SK are stored. Fig. 4 is an explanatory drawing showing an example of the image 500 for selecting distribution destinations where the distribution pieces Fr of the secret key SK are to be stored.

In the image 500 shown in Fig. 4, option images 501, 502, 503, 504, and 505 are displayed as options for the distribution destinations of the distribution pieces Fr of the secret key SK. The option image 501 is an option for selecting the information processing device 100 as a distribution destination of the distribution piece Fr of the secret key SK. The option image 502 is an option for selecting the other terminal owned by the user, as a distribution destination of the distribution piece Fr of the secret key SK. The option image 503 is an option for selecting the server of a service provider of crypto-asset transactions as a distribution destination of the distribution piece Fr of the secret key SK. The option image 504 is an option for selecting the server of AA bank, which is a third-party organization, as a distribution destination of the distribution piece Fr of the secret key SK. The option image 505 is an option for selecting the server of BB bank, which is a third-party organization, as a distribution destination of the distribution piece Fr of the secret key SK.

The image 500 in Fig. 4 shows an example in which the user selects the option image 501 (information processing device 100), the option image 503 (the server of the provider), and the option image 505 (the server of BB bank as a third-party organization) as distribution destinations for the distribution pieces Fr of the secret key SK. When the distribution destinations of the distribution pieces Fr of the secret key SK are selected, it is confirmed whether to determine the distribution destinations of the distribution pieces Fr as shown in the image 510 of Fig. 4. By pressing a confirmation button 511, the user can determine the distribution destinations where the distribution pieces Fr are to be stored, from among the presented distribution destination candidates.

The distribution destination control unit 130 controls, on the basis of the selection of the user, the plurality of distribution destinations where the distribution pieces Fr of the secret key SK are to be managed in a distributed manner. Specifically, the distribution destination control unit 130 requests a terminal or server, which has been selected as a distribution destination of the distribution piece Fr by the user, to participate in the distributed management of the distribution pieces Fr, and executes a process for generating the distribution pieces Fr of the secret key SK in cooperation with the distribution destination that has accepted the request.

For example, by presenting an image 520 shown in Fig. 5 and an image 530 shown in Fig. 6, the distribution destination control unit 130 may request a terminal or server, which has been selected as a distribution destination of the distribution piece Fr, to participate in the distributed management of the distribution pieces Fr. Fig. 5 is an explanatory drawing showing an example of an image 520 for allowing the other terminal owned by the user to participate in the distributed management of the distribution pieces Fr. Fig. 6 is an explanatory drawing showing an example of an image 530 for allowing the server of AA bank, which is a third-party organization, to participate in the distributed management of the distribution pieces Fr.

As shown in Fig. 5, when requesting the other terminal owned by the user to participate in the distributed management of the distribution pieces Fr, the distribution destination control unit 130 may present the image 520 including a two-dimensional code 521 indicating the URL of a web site where the distribution destination of the distribution piece Fr is to be registered. The user can register the other terminal as the distribution destination of the distribution piece Fr by allowing the other terminal determined as the distribution destination of the distribution piece Fr to read the presented two-dimensional code 521.

As shown in Fig. 6, for example, when requesting the server of a third-party organization to join the distributed management of the distribution pieces Fr, the distribution destination control unit 130 may present a web site for logging into the third-party organization as the image 530 and prompt the user to log into the third-party organization. When user login to the third-party organization is confirmed, the distribution destination control unit 130 requests the server of the third-party organization to participate in the distributed management of the distribution pieces Fr. If user login to the third-party organization is not confirmed, the distribution destination control unit 130 may notify the user that the server of the third-party organization cannot be used as a distribution destination of the distribution piece Fr.

In the process of generating the distribution pieces Fr of the secret key SK, the information processing device 100 and the distribution destinations having accepted the request perform operations independently using a known MPC technique and transmit and receive the operation results to and from one another, thereby generating the distribution pieces Fr of the secret key SK. Thus, the distribution piece Fr of the secret key SK is generated in the terminal or the server at the distribution destination that has participated in the process of generating the distribution pieces Fr of the secret key SK, so that the information processing device 100 can distribute and manage the distribution pieces Fr of the secret key SK at the respective distribution destinations.

The signature generation unit 140 generates the electronic signature ES using the secret key SK while using some of the distribution pieces Fr stored at the respective distribution destinations. Specifically, the signature generation unit 140 informs execution of the process of generating the electronic signature ES using the secret key SK to a plurality of distribution destinations where the plurality of distribution pieces Fr are to be stored, and cooperates with the distribution destinations having responded to the signature generation unit 140, so that the electronic signature ES is generated using the secret key SK.

However, in the process of generating the electronic signature ES, the signature generation unit 140 receives the distribution pieces Fr stored at the respective distribution destinations but does not restore the secret key SK. According to the MPC technology, the signature generation unit 140 can generate the electronic signature ES using the secret key SK from the plurality of distribution pieces Fr without restoring the secret key SK.

The electronic signature ES can be generated using the secret key SK when a predetermined number of distribution pieces Fr are collected from among all the distribution pieces Fr of the secret key SK. The number of distribution pieces Fr required for generating the electronic signature ES using the secret key SK can be set when the process of generating the distribution pieces Fr of the secret key SK is performed.

A transaction issuance unit 150 issues the transaction Tr with the electronic signature ES to the blockchain of the information processing system 10. Specifically, the transaction issuance unit 150 first generates the transaction Tr that moves a crypto-asset managed in the blockchain of the information processing system 10 from an address to another address, on the basis of an entry from the user. The transaction issuance unit 150 attaches the electronic signature ES with the secret key SK to the generated transaction Tr, and then issues the transaction Tr attached with the electronic signature ES to the blockchain of the information processing system 10.

The transactions Tr issued for the blockchain are verified at the nodes of the information processing system 10 and are then collected into a block in each predetermined period. Thereafter, the block containing the transactions Tr is linked as a new block to the blockchain, which establishes the transfer of crypto-assets indicated in the transactions Tr.

In the blockchain, control can also be performed such that only the transaction Tr of the electronic signature ES generated using the specific distribution pieces Fr is added to the blockchain according to the smart contract technology. Specifically, the information processing device 100 can preset an audit rule for approving only the electronic signature ES including the specific distribution pieces Fr, as a smart contract in the blockchain. In such a case, the information processing device 100 can perform control such that only the transaction Tr of the electronic signature ES generated using the distribution pieces Fr stored in the information processing device 100 is added to the blockchain. This allows the user to prevent the transaction Tr that may be disadvantageous to the user from being issued in the blockchain without involvement of the user.

The audit unit 160 verifies which one of the distribution pieces Fr has been used to generate the electronic signature ES attached to the transaction Tr on the blockchain. Specifically, the audit unit 160 first obtains, from the blockchain, information about the transaction Tr incorporated in the blockchain of the information processing system 10. The audit unit 160 then identifies the distribution pieces Fr used to generate the electronic signature ES, by verifying the electronic signature ES attached to the transaction Tr.

For example, the audit unit 160 may present the verification result of the electronic signature ES attached to the transaction Tr to the user by presenting an image 540 shown in Fig. 7. Fig. 7 is an explanatory drawing showing an example of the image 540 showing the verification result of the electronic signature ES attached to the transaction Tr.

The image 540 shown in Fig. 7 includes a transaction information text 541 indicating information about the verified transaction Tr and a verification result text 542 indicating the verification result of the electronic signature ES attached to the transaction Tr.

The transaction information text 541 may include, for example, information about the amount of a crypto-asset moved in the verified transaction Tr, the origin of the crypto-asset, and the destination of the crypto-asset. The transaction information text 541 may further include information about the date and time of the issuance of the transaction Tr. The verification result text 542 may include, for example, information about the subject or terminal that stores the distribution pieces Fr having generated the electronic signature ES attached to the transaction Tr. By referring to image 540 shown in Fig. 7, the user can verify which one of the distribution pieces Fr has been used to generate the electronic signature ES attached to the suspicious transaction Tr. Accordingly, the user can quickly recognize misuse or theft of the distribution pieces Fr that are managed in a distributed manner.

The communication unit 170 is, for example, a communication interface for connection to the network of the information processing system 10. For example, the communication unit 170 may be a communication card for a wired or wireless local area network (LAN), Wi-Fi (registered trademark), Bluetooth (registered trademark), or a wireless USB (WUSB). The information processing device 100 can issue the transaction Tr indicating a crypto-asset transaction to the network of the information processing system 10 via the communication unit 170. In addition, the information processing device 100 can acquire information about the transaction Tr issued from the network of the information processing system 10, via the communication unit 170.

The information processing device 100 configured thus can divide the secret key SK used for crypto-asset transactions into the plurality of distribution pieces Fr, and store the separated distribution pieces Fr at the respective distribution destinations selected by the user. This allows the information processing device 100 to manage the distribution pieces Fr in a distributed manner at distribution destinations that are more reliable to the user, thereby further improving the sense of the security in crypto-asset transactions.

In addition, the information processing device 100 can verify which one of the distribution pieces Fr of the secret key SK has been used to generate the electronic signature ES of the transaction Tr issued on the blockchain for managing crypto-assets. Thus, the information processing device 100 can verify which one of the distribution pieces Fr has been used to generate the electronic signature ES attached to the suspicious transaction Tr, thereby quickly recognizing misuse or theft of the distribution pieces Fr managed in a distributed manner.

### <3. Operations of information processing device>

Referring to Figs. 8 to 10, the operations of the information processing device 100 according to the present embodiment will be described below. Fig. 8 is a sequence diagram showing the operations of the information processing device 100 when the distribution pieces Fr of the secret key SK are generated. Fig. 9 is a sequence showing the operations of the information processing device 100 when the transaction Tr is issued. Fig. 10 is a sequence showing the operations of the information processing device 100 when the electronic signature is verified.

### (3.1. Operations in generation of distribution pieces)

As shown in Fig. 8, first, the user determines the distribution destination of the distribution pieces Fr of the secret key SK from among distribution destination candidates presented by the candidate presentation unit 120 (S101). In Fig. 8, the information processing device 100, a first distribution destination, and a second distribution destination are determined as the distribution destinations of the distribution pieces Fr of the secret key SK.

Subsequently, the distribution destination control unit 130 requests the determined distribution destinations (the first distribution destination and the second distribution destination) to participate in the distribution management of the distribution pieces Fr (S102, S104). In response to the request, acceptance of the request is returned from each of the first distribution destination and the second distribution destination (S103, S105).

Thereafter, the distribution destination control unit 130 executes the process of generating the distribution pieces Fr of the secret key SK in cooperation with the first distribution destination and the second distribution destination (S106). Specifically, the information processing device 100, the first distribution destination, and the second distribution destination perform operations and transmit and receive the operations results to and from one another, thereby generating the distribution pieces Fr in each of the information processing device 100, the first distribution destination, and the second distribution destination.

The generated distribution pieces Fr are stored in the information processing device 100, the first distribution destination, and the second distribution destination, respectively (S107, S108, S109). Thus, the information processing device 100 can manage the three distribution pieces Fr, which are obtained by dividing the secret key SK, in a distributed manner in the information processing device 100, the first distribution destination, and the second distribution destination, respectively.

### (3.2. Operations in transaction issuance)

As shown in Fig. 9, first, the transaction issuance unit 150 sets an audit rule on the basis of an entry from the user (S201). The audit rule may limit the distribution pieces Fr used for generating the electronic signature ES. For example, the audit rule may define that the distribution pieces Fr stored in the information processing device 100 are used to generate the electronic signature ES attached to the transaction Tr.

The transaction issuance unit 150 then transmits the set audit rule to the blockchain (S202) and implements the audit rule as a smart contract in the blockchain (S203).

Thereafter, on the basis of an entry from the user, the issuance of the transaction Tr to indicate movement of a crypto-asset managed in the blockchain is determined (S204). At this time, first, the signature generation unit 140 performs the process of generating the electronic signature ES using the secret key SK in cooperation with the first distribution destination, the second distribution destination, and the information processing device 100 that store the respective distribution pieces Fr (S205). Thus, the electronic signature ES is generated using the secret key SK, allowing the transaction issuance unit 150 to generate the transaction Tr attached with the electronic signature ES (S206).

Thereafter, the transaction issuance unit 150 issues the transaction Tr attached with the electronic signature ES to the blockchain (S207). The transaction Tr issued to the blockchain is verified for the electronic signature ES and the audit rule at each node of the information processing system 10 that manages the blockchain (S208). The verified transactions Tr are grouped into a block in each predetermined period and are linked as a new block to the blockchain (S209). Thus, the movement of a crypto-asset indicated by the issued transaction Tr is established.

### (3.3. Operations in verification of electronic signature)

As shown in Fig. 10, for example, if a suspicious movement of a crypto-asset is found, the audit unit 160 queries the blockchain for information about the transaction Tr indicating the movement of the corresponding crypto-asset (S301).

The audit unit 160 then obtains information about the transaction Tr from the blockchain (S302) and verifies which one of the distribution pieces Fr has been used to generate the electronic signature ES attached to the obtained transaction Tr (S303). Specifically, by calculating the electronic signature ES attached to the transaction Tr, the audit unit 160 can identify the distribution piece Fr used to generate the electronic signature ES.

Thus, by verifying the electronic signature ES attached to the suspicious transaction Tr, the information processing device 100 can quickly recognize misuse or theft of the distribution piece Fr used to generate the electronic signature ES.

### <4. Modifications>

### (4.1. First modification)

Referring to Fig. 11, a first modification of the information processing device 100 according to the present embodiment will be described below. The first modification is a modification in which the reliability of a combination of distribution destinations selected by the user is further presented to the user. Fig. 11 is an explanatory drawing showing an example of an image 550 that indicates the reliability of distribution destinations where the distribution pieces Fr are managed in a distributed manner.

As shown in Fig. 11, when the user selects the distribution destinations of the distribution pieces Fr, the candidate presentation unit 120 may convert the reliability of the combination of the selected distribution destinations into a numeric value and present the numeric value to the user. Specifically, the candidate presentation unit 120 may calculate the reliability of the combination of the selected distribution destinations as a numeric value on the basis of a predetermined rule, and present the numeric value of the calculated reliability to the user.

For example, as indicated by option images 551, 553, and 554 in an image 550 shown in Fig. 11, the information processing device 100 (this terminal), a provider server (wallet server), and the server of AA bank serving as a third-party organization (AA bank server) are selected as distribution destinations of the distribution pieces Fr. In such a case, the candidate presentation unit 120 may present the reliability value of the combination of these distribution destinations as a reliability image 556 (80 points) to the user.

The numeric value of the reliability may be calculated, for example, on the basis of the number of distributions of the distribution pieces Fr obtained by dividing the secret key SK and the number of distribution pieces Fr required for generating the electronic signature ES using the secret key SK, may be calculated on the basis of the probability of collusion between distribution destinations (for example, the commonality of the management entities of the distribution destinations or the commonality of the cloud services used by the servers of the distribution destinations), or may be calculated on the basis of the security strength of the distribution destinations.

For example, the reliability of the combination of the distribution destinations of the distribution pieces Fr may be calculated using the following items according to a point reduction method from a predetermined score (for example, 100 points).
·The number of distribution pieces Fr required for generating the electronic signature ES is smaller than the number of distributions of the distribution pieces Fr: -20
·Distribution destinations belonging to a common organization: -30
·Distribution destinations using a common cloud service: -10
·An organization having not been audited for security is included in distribution destinations: -10
·An organization having caused a serious security incident is included in distribution destinations: -20

When calculating the reliability of the combination of the distribution destinations of the distribution pieces Fr according to a point reduction method, the candidate presentation unit 120 may present the rule as the reason for the point reduction and the distribution destination as the target of the rule to the user. According to the calculation, the user can obtain a guideline for selecting a more reliable combination of distribution destinations, thereby more easily selecting a highly reliable combination of distribution destinations.

Note that the numeric value of reliability may be calculated using a point addition method from a predetermined point (for example, 0 point) instead of the above-described point reduction method. Furthermore, the value of the reliability may be calculated using both the point reduction method and the point addition method.

In addition, the candidate presentation unit 120 may authenticate a distribution destination candidate with higher reliability and present the authenticated distribution destination candidate as a highlighted area to the user. The candidate presentation unit 120 may authenticate, for example, an organization that satisfies a predetermined condition such as a robust security measure or a small number of security incident occurrences, as a distribution destination candidate with high reliability. The candidate presentation unit 120 highlights and presents the authenticated distribution destination candidate to the user, thereby allowing the user to easily select the reliable distribution destination.

Furthermore, the candidate presentation unit 120 may prepare a combination of distribution destinations with higher reliability as a template in advance. The candidate presentation unit 120 presents a combination of distribution destinations prepared in advance to the user, thereby facilitating the selection of the distribution destinations of the distribution pieces Fr.

### (4.2. Second modification)

Referring to Fig. 12, a second modification of the information processing device 100 according to the present embodiment will be described below. In a second modification, the information processing device 100 can perform processing of switching a distribution destination for storing the distribution piece Fr to another distribution destination. Fig. 12 is a sequence showing the operations of the information processing device 100 when the distribution destination for storing the distribution piece Fr is switched to another distribution destination.

As shown in Fig. 12, it is assumed that the user has entered a change of the distribution destination for storing the distribution piece Fr (S401). For example, it is assumed that the user has made an entry to change a distribution destination for storing one of the distribution pieces Fr from the second distribution destination to a third distribution destination.

In such a case, the distribution destination control unit 130 transmits a request to switch the storage of the distribution piece Fr from the second distribution destination to the third distribution destination to the second distribution destination (S402). The second distribution destination having received the request encrypts the stored distribution piece Fr and transmits the distribution piece Fr to the third distribution destination (S403). The third distribution destination having received the encrypted distribution piece Fr deciphers and stores the received distribution piece Fr (S404).

Thereafter, the distribution destination control unit 130 performs processing for preventing misuse of the distribution piece Fr stored in the second distribution destination that is a distribution destination before switching. Specifically, the distribution destination control unit 130 cooperates with the first distribution destination and the third distribution destination to reset the random number components of the distribution pieces Fr stored in the distribution destinations (S405). This disables the distribution piece Fr stored in the second distribution destination. Thus, the electronic signature ES cannot be generated using the distribution piece Fr stored in the second distribution destination. In the foregoing processing, only the random number components of the distribution pieces Fr can be reset without restoring the secret key SK, as in the generation of the electronic signature ES using the secret key SK.

The distribution destination control unit 130 can also prevent the misuse of the distribution piece Fr stored in the second distribution destination, which is the distribution destination before switching, without resetting the random number components of the distribution pieces Fr.

As an example, the distribution destination control unit 130 may limit the number of switched distribution destinations for storing the distribution pieces Fr. For example, the distribution destination control unit 130 may limit the number of switched distribution destinations such that the number of distribution destinations switchable at one time is smaller than the number of distribution pieces Fr required for generating the electronic signature ES. Thus, the distribution destination control unit 130 can prevent the electronic signature ES from being generated using only the distribution piece Fr stored in the distribution destination before switching.

As another example, the distribution destination control unit 130 may set, in a smart contract, an audit rule for limiting the distribution piece Fr used when the electronic signature ES is generated. For example, the distribution destination control unit 130 may set, in a smart contract, an audit rule that the electronic signature ES is always generated using the first distribution destination before switching the distribution destination of the distribution piece Fr or the distribution piece Fr stored in the information processing device 100. More specifically, the distribution destination control unit 130 may set, in a smart contract, an audit rule that the electronic signature ES is always generated using the distribution piece Fr stored in the information processing device 100 that is a terminal owned by the user. Thus, the distribution destination control unit 130 can prevent the electronic signature ES from being generated using only the distribution piece Fr stored in the distribution destination before switching.

### <5. Hardware configuration>

Referring to Fig. 13, the hardware configuration of the information processing device 100 according to the present embodiment will be described below. Fig. 13 is a block diagram illustrating an example of the hardware configuration of the information processing device 100 according to the present embodiment.

The functions of the information processing device 100 according to the present embodiment can be implemented through cooperation between software and the hardware described hereinafter. The functions of the candidate presentation unit 120, the distribution destination control unit 130, the signature generation unit 140, the transaction issuance unit 150, and the audit unit 160 may be executed by, for example, a CPU 901. The functions of the input unit 110 may be implemented by, for example, an input device 906. The functions of the communication unit 170 may be implemented by, for example, a connection port 910 or a communication device 911.

As illustrated in Fig. 13, the information processing device 100 includes a central processing unit (CPU) 901, a read only memory (ROM) 902, and a random access memory (RAM) 903.

The information processing device 100 may further include a host bus 904a, a bridge 904, an external bus 904b, an interface 905, the input device 906, an output device 907, a storage device 908, a drive 909, the connection port 910, or the communication device 911. The information processing device 100 may include a processing circuit such as a digital signal processor (DSP) or application specific integrated circuit (ASIC) instead of or together with the CPU 901.

The CPU 901 functions as an arithmetic processing device or a control device and controls the operations in the information processing device 100 according to various programs recorded in the ROM 902, the RAM 903, the storage device 908, or the drive 909. The ROM 902 stores programs used by the CPU 901, computation parameters, and the like. The RAM 903 temporarily stores programs used for execution by the CPU 901, parameters used during the execution, and the like.

The CPU 901, the ROM 902, and the RAM 903 are connected to one another via the host bus 904a capable of high-speed data transmission. The host bus 904a is connected to the external bus 904b, which is a peripheral component interconnect/interface (PCI) bus or the like, via the bridge 904, and the external bus 904b is connected to various components via the interface 905.

For example, the input device 906 is a device such as a mouse, a keyboard, a touch panel, a button, a switch, or a lever that receives an entry from the user. Note that the input device 906 may be a microphone or the like that detects a user's voice. The input device 906 may be, for example, a remote control device using infrared light or other radio waves, or may be an externally-connected device that handles operations by the information processing device 100.

The input device 906 further includes an input control circuit that outputs, to the CPU 901, an input signal generated on the basis of information input by the user. The user can input various types of data or instructions about processing operations to the information processing device 100 by operating the input device 906.

The output device 907 is a device capable of visually or aurally presenting, to the user, information acquired or generated by the information processing device 100. The output device 907 may be, for example, a display device such as a liquid crystal display (LCD), a plasma display panel (PDP), an organic light emitting diode (OLED) display, a hologram, or a projector, a sound output device such as a speaker or a headphone, or a printing device such as a printer. The output device 907 can output information obtained through processing by the information processing device 100, as text or a video such as an image and a sound such as voice or audio.

The storage device 908 is a data storage device configured as an example of the storage unit of the information processing device 100. The storage device 908 may be composed of, for example, a magnetic storage device such as a hard disk drive (HDD), a semiconductor storage device, an optical storage device, or a magneto-optical storage device. The storage device 908 can store programs executed by the CPU 901, various types of data, or various types of data obtained from the outside.

The drive 909 is a device that reads from or writes to a removable recording medium such as a magnetic disk, an optical disk, a magneto-optical disk, or a semiconductor memory and is internal or external to the information processing device 100. For example, the drive 909 can read out information recorded in an attached removable recording medium and output the information to the RAM 903. The drive 909 can also write records to the attached removable recording medium.

The connection port 910 is a port for directly connecting an external connection device to the information processing device 100. The connection port 910 can be, for example, a universal serial bus (USB) port, an IEEE1394 port, or a small computer system interface (SCSI) port. Furthermore, the connection port 910 may be an RS-232C port, an optical audio terminal, or a high-definition multimedia interface (HDMI, registered trademark) port. The connection port 910 can send and receive various types of data between the information processing device 100 and the external connection device through connection to the external connection device.

The communication device 911 is, for example, a communication interface composed of a communication device for connection to a network 920. The communication device 911 may be, for example, a communication card for a wired or wireless local area network (LAN), Wi-Fi (registered trademark), Bluetooth (registered trademark), or a wireless USB (WUSB). Furthermore, the communication device 911 may be a router for optical communication, a router for an asymmetric digital subscriber line (ADSL), or a modem for various communications.

The communication device 911 can, for example, send and receive signals to and from the Internet or other communication devices using a predetermined protocol such as TCP/IP. Additionally, the network 920 connected to the communication device 911 is a network connected by wires or wirelessly, for example, an Internet communication network, a household LAN, an infrared communication network, a radio wave communication network, or a satellite communication network or the like.

Note that it is also possible to create a program for causing hardware such as the CPU 901, the ROM 902, and the RAM 903 built into the computer to perform functions equivalent to those of the information processing device 100 described above. A computer-readable recording medium on which the program is recorded can also be provided.

Although the preferred embodiment of the present disclosure has been described in detail thus with reference to the accompanying drawings, the technical scope of the present disclosure is not limited to such examples. It is apparent that those having ordinary knowledge in the technical field of the present disclosure could conceive of various modified examples or changed examples within the scope of the technical ideas set forth in the claims, and it should be understood that these examples also naturally fall within the technical scope of the present disclosure.

Furthermore, the effects described herein are merely explanatory or exemplary and are not intended as limiting. In other words, the technology according to the present disclosure may exhibit other effects apparent to those skilled in the art from the description herein, in addition to or in place of the above effects.

The following configurations also fall within the technical scope of the present disclosure.
(1) An information processing device including: a distribution destination control unit that controls a plurality of distribution destinations for respectively storing a plurality of distribution pieces obtained by secretly distributing a secret key, on the basis of a selection by a user;
   a signature generation unit that generates an electronic signature by the secret key, by using part of the plurality of distribution pieces stored in the plurality of distribution destinations;
   a transaction issuance unit that issues a transaction, which is attached with the electronic signature, to a blockchain; and
   an audit unit that verifies which one of the plurality of distribution pieces has been used to generate the electronic signature attached to the transaction on the blockchain.
(2) The information processing device according to (1), wherein the signature generation unit generates the electronic signature by using a predetermined number of distribution pieces from among the plurality of distribution pieces.
(3) The information processing device according to (1) or (2), wherein the plurality of distribution destinations include a terminal owned by the user, a server managed by a service provider of the transaction, or a server managed by a third-party organization.
(4) The information processing device according to (3), wherein
   the plurality of distribution destinations include at least a terminal owned by the user, and the signature generation unit generates the electronic signature by using at least the distribution pieces stored in the terminal owned by the user.
(5) The information processing device according to any one of (1) to (4), wherein the distribution destination control unit executes the process of generating the plurality of distribution pieces in cooperation with the plurality of distribution destinations selected by the user.
(6) The information processing device according to any one of (1) to (5), wherein when changing the plurality of distribution destinations, the distribution destination control unit resets random number components included in the distribution pieces respectively.
(7) The information processing device according to any one of (1) to (6), further including a candidate presentation unit that presents the candidates of the plurality of distribution destinations to the user, and
   the user selects the plurality of distribution destinations for storing the plurality of distribution pieces from among the presented candidates.
(8) The information processing device according to (7), wherein the candidate presentation unit derives the reliability of the combination of the plurality of distribution destinations selected by the user, and further presents the derived reliability to the user.
(9) The information processing device according to (8), wherein the reliability is derived on the basis of a predetermined rule that refers to at least one of the number of distribution destinations included in the combination, a mutually common term between the distribution destinations, the security strength of each of the distribution destinations, and respective past records of the distribution destinations.
(10) The information processing device according to (9), wherein the candidate presentation unit further presents a basis for deriving the reliability to the user.
(11) The information processing device according to any one of (7) to (10), wherein the candidate presentation unit further presents a recommended combination of the candidates of the plurality of distribution destinations to the user.
(12) An information processing method performed by a computer, the method including: controlling a plurality of distribution destinations for respectively storing a plurality of distribution pieces obtained by secretly distributing a secret key, on the basis of a selection by a user;
   generating an electronic signature by the secret key, by using part of the plurality of distribution pieces stored in the plurality of distribution destinations;
   issuing a transaction, which is attached with the electronic signature, to a blockchain; and verifying which one of the plurality of distribution pieces has been used to generate the electronic signature attached to the transaction on the blockchain.
(13) A program causing a computer to function as:
   a distribution destination control unit that controls a plurality of distribution destinations for respectively storing a plurality of distribution pieces obtained by secretly distributing a secret key, on the basis of a selection by a user;
   a signature generation unit that generates an electronic signature by the secret key, by using part of the plurality of distribution pieces stored in the plurality of distribution destinations;
   a transaction issuance unit that issues a transaction, which is attached with the electronic signature, to a blockchain; and
   an audit unit that verifies which one of the plurality of distribution pieces has been used to generate the electronic signature attached to the transaction on the blockchain.

### [Reference Signs List]

10 Information processing system
100 Information processing device
110 Input unit
120 Candidate presentation unit
130 Distribution destination control unit
140 Signature generation unit
150 Transaction issuance unit
160 Audit unit
170 Communication unit
Tr Transaction
ES Electronic signature
SK Secret key
Fr Distribution piece

## Claims

1. An information processing device comprising: a distribution destination control unit that controls a plurality of distribution destinations for respectively storing a plurality of distribution pieces obtained by secretly distributing a secret key, on a basis of a selection by a user;
a signature generation unit that generates an electronic signature by the secret key, by using part of the plurality of distribution pieces stored in the plurality of distribution destinations;
a transaction issuance unit that issues a transaction, which is attached with the electronic signature, to a blockchain; and
an audit unit that verifies which one of the plurality of distribution pieces has been used to generate the electronic signature attached to the transaction on the blockchain.

2. The information processing device according to claim 1, wherein the signature generation unit generates the electronic signature by using a predetermined number of distribution pieces from among the plurality of distribution pieces.

3. The information processing device according to claim 1, wherein the plurality of distribution destinations include a terminal owned by the user, a server managed by a service provider of the transaction, or a server managed by a third-party organization.

4. The information processing device according to claim 3, wherein
the plurality of distribution destinations include at least a terminal owned by the user, and
the signature generation unit generates the electronic signature by using at least the distribution pieces stored in the terminal owned by the user.

5. The information processing device according to claim 1, wherein the distribution destination control unit executes a process of generating the plurality of distribution pieces in cooperation with the plurality of distribution destinations selected by the user.

6. The information processing device according to claim 1, wherein when changing the plurality of distribution destinations, the distribution destination control unit resets random number components included in the distribution pieces respectively.

7. The information processing device according to claim 1, further comprising a candidate presentation unit that presents candidates of the plurality of distribution destinations to the user, and
the user selects the plurality of distribution destinations for respectively storing the plurality of distribution pieces from among the presented candidates.

8. The information processing device according to claim 7, wherein the candidate presentation unit derives reliability of a combination of the plurality of distribution destinations selected by the user, and further presents the derived reliability to the user.

9. The information processing device according to claim 8, wherein the reliability is derived on the basis of a predetermined rule that refers to at least one of the number of distribution destinations included in the combination, a mutually common term between the distribution destinations, a security strength of each of the distribution destinations, and respective past records of the distribution destinations.

10. The information processing device according to claim 9, wherein the candidate presentation unit further presents a basis for deriving the reliability to the user.

11. The information processing device according to claim 7, wherein the candidate presentation unit further presents a recommended combination of the candidates of the plurality of distribution destinations to the user.

12. An information processing method performed by a computer, the method comprising:
controlling a plurality of distribution destinations for respectively storing a plurality of distribution pieces obtained by secretly distributing a secret key, on a basis of a selection by a user;
generating an electronic signature by the secret key, by using part of the plurality of distribution pieces stored in the plurality of distribution destinations;
issuing a transaction, which is attached with the electronic signature, to a blockchain; and
verifying which one of the plurality of distribution pieces has been used to generate the electronic signature attached to the transaction on the blockchain.

13. A program causing a computer to function as:
a distribution destination control unit that controls a plurality of distribution destinations for respectively storing a plurality of distribution pieces obtained by secretly distributing a secret key, on a basis of a selection by a user;
a signature generation unit that generates an electronic signature by the secret key, by using part of the plurality of distribution pieces stored in the plurality of distribution destinations;
a transaction issuance unit that issues a transaction, which is attached with the electronic signature, to a blockchain; and
an audit unit that verifies which one of the plurality of distribution pieces has been used to generate the electronic signature attached to the transaction on the blockchain.
